# EUROPÄISCHE PATENTSCHRIFT

(11) **EP 0 436 255 B1**
(45) Veröffentlichungstag und Bekanntmachung des Hinweises auf die Patenterteilung: **01.02.1995**
(21) Anmeldenummer: 90250293.9
(22) Anmeldetag: 28.11.1990
(51) Int. Cl.: H02B 1/28

(54) **Gehäuse für ein Hochspannungs-Bauteil mit einer Verschluss- und Dichtungsvorrichtung**
Casing for a high voltage component with a closing and sealing device
Boîtier pour un composant haute tension avec un dispositif de fermeture et d'étanchéité

(30) Priorität: 04.01.1990 DE 9000095 U
(43) Veröffentlichungstag der Anmeldung: 10.07.1991
(73) Patentinhaber: SIEMENS AKTIENGESELLSCHAFT, 80333 München (DE)
(72) Erfinder: Schweppe, Friedrich, W-6116 Eppertshausen (DE)

(56) Entgegenhaltungen:
- EP-A- 0 224 074
- DE-A- 3 004 856

## Beschreibung

Die Erfindung betrifft ein Gehäuse zur Aufnahme eines Hochspannungsbauteiles mit einer Verschluß- und Dichtungsvorrichtung, die ein axial komprimierbares und an konzentrische Wandflächen anlegbares gummieleastisches Verschlußorgan aufweist. Ein Gehäuse dieser Art ist in EP-A-0 224 074 offenbart. Der Verschluß besteht aus einem elastischen Teil, das durch einem von außen betätigbaren Nocken und einem mit dem elastischen Teil verbundenen Stab "wie bei einer Thermoskanne" ausgedehnt werden kann. Das elastische Verschlußorgan ist an einer mit einem Träger verbundenen Stange angeordnet, wobei aufgrund der Stange der Platzbedarf erhöht wird.

Es ist ein weiteres Gehäuse dieser Art bekannt (DE-A-37 39 120), das als Isolierstoffkapselung einer Mittelspannungsschalt- oder Verteileranlage ausgebildet ist und bei dem die Verschluß- und Dichtungsvorrichtung zur abgedichteten Durchführung einer Betätigungsstange durch die Wandung der Kapselung dient. Als gummielastisches Verschlußorgan dient dabei ein Körper aus einer weichen Silikonkautschuk-Gießmasse, der mit einem geringen Untermaß an der Betätigungsstange anliegt. Durch eine Druckplatte an der äußeren Wandung der Kapselung wird für ein dichtes Anliegen des Verschlußorgans auch an der Wandung der Kapselung gesorgt.

Der Erfindung liegt die Aufgabe zugrunde, die Verschluß- und Dichtungsvorrichtung des Gehäuses lösbar zu gestalten, damit im Bedarfsfall Zugang zu dem Inneren des Gehäuses besteht.

Diese Aufgabe wird gemäß der Erfindung dadurch gelöst, daß das gummielastische Verschlußorgan am Umfang eines in eine Öffnung des Gehäuses einführbaren zylindrischen Trägers angeordnet ist und in axialer Richtung einerseits an einem ringförmigen Absatz des Trägers und andererseits an einem relativ zu dem Träger axial verschiebbar angeordneten Druckstück abgestützt ist. Auf diese Weise kann durch Verschiebung des Druckstückes die Abdichtung hergestellt und im Bedarfsfall wieder aufgehoben werden.

Es erweist sich als vorteilhaft, eine betriebsmäßig bedienbare Hebelanordnung zur Verschiebung des Druckstückes relativ zu dem Träger vorzusehen. Zur Anbringung einer solchen Hebelanordnung kann das Druckstück mit einer Durchtrittsöffnung für ein in dem Träger verankertes Stützorgan vorgesehen sein, und an dem über das Druckstück überstehenden Endteil des Stützorganes kann ein zweiteiliger Hebel mit einer dem Druckstück zugewandten Arbeitsfläche schwenkbar gelagert sein. Durch das Verhältnis der Hebellängen hat man es in der Hand, bei nicht zu hoher Bedienungskraft eine wirksame Kompression bzw. Entlastung des gummielastischen Verschlußorganes zu bewirken.

Eine noch günstigere Handhabung der Vorrichtung ist dadurch zu erreichen, daß zwei aus Stützorganen und Hebeln bestehende Hebelanordnungen vorgesehen und die dem Druckstück abgewandten Enden der Hebel durch einen Bedienungshandgriff verbunden sind.

Eine vorteilhafte Anwendung eines Gehäuses mit Verschlußvorrichtung der vorstehend beschriebenen Art ist durch die rohr- oder zylinderförmige Ausbildung des Gehäuses zur Aufnahme einer HH-Sicherung zu erreichen, wobei nahe dem durch die Verschluß- und Dichtungsvorrichtung zu verschließenden Ende ein zu erdender Flansch vorgesehen ist. Das Gehäuse ist dann beispielsweise in eine mit Isoliergas zu füllende Metallkapselung einzusetzen, derart, daß das Gehäuse im Inneren des Behälters von Isoliergas umgeben ist, jedoch der Innenraum mit der umgebenden Atmosphäre in Verbindung steht. Die Verschluß- und Dichtungsvorrichtung bewirkt dabei eine dielektrische Abdichtung zwischen dem hochspannungführenden Aufnahmekontakt der HH-Sicherung und der Metallkapselung bzw. dem zu erdenden Flansch.

Die Erfindung wird im folgenden anhand des in den Figuren dargestellten Ausführungsbeispieles näher erläutert.

Im Zusammenhang mit der vostehend erläuterten Anwendung der Erfindung empfiehlt es sich ferner, den Träger des Verschlußorgans an seinem der HHZ-Sicherung zugewandten Ende mit Haltearmen für eine Kontaktfederanordnung sowie mit einer zentrischen Vertretung zur Aufnahme eines kontaktseitigen Endes der HH-Sicherung zu versehen. Die Verschluß- und Dichtungsanordnung bildet dann zugleich eine zum Betrieb der HH-Sicherung erforderliche Einrichtung, was die Sicherheit verbessert.

Die Figur 1 zeigt im Schnitt den Endbereich eines aus Isolierstoff bestehenden zylindrischen Gehäuses einer HH-Sicherung mit einer Verschluß- und Dichtungsvorrichtung.

In der Figur 2 ist eine Hebelanordnung mit einem Bedienungshandgriff an der Außenseite der Verschluß- und Dichtungsvorrichtung mit Blick auf die Stirnseite des Gehäuses gemäß der Figur 1 dargestellt.

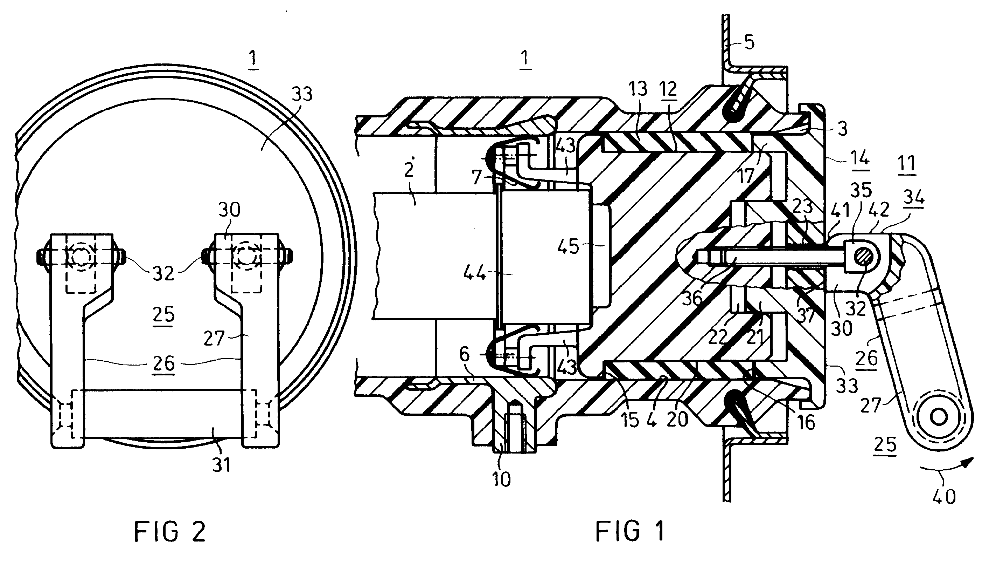

Das in der Figur 1 gezeigte, aus Isolierstoff bestehende Gehäuse 1 ist zur Aufnahme einer HH-Sicherung 2 vorgesehen. In der Figur 1 sind nur ein an eine Öffnung 3 des Gehäuses 1 angrenzender Bereich mit einer zylindrischen Wandfläche 4 und ebenfalls nur ein Teil der HH-Sicherung 2 dargestellt. Nahe der Öffnung 3 ist das Gehäuse 1 mit einem Flansch 5 versehen, der zur dichten Befestigung des Gehäuses 1 in einer Metallkapselung dient. Ferner ist in den Werkstoff des Gehäuses 1 ein Kontaktring 6 eingebettet, der zur Anlage von Kontaktfedern 7 vorgesehen ist und der an seinem äußeren Umfang ein Klemmstück 10 für einen im Inneren der Metallkapselung befindlichen Leiter besitzt.

Zum Verschließen der Öffnung 3 des Gehäuses 1 dient eine als Ganzes mit 11 bezeichnete Verschluß- und Dichtungsvorrichtung, die als wesentliche Teile einen zylindrischen Träger 12, ein hohlzylindrisches, gummielastiches Verschlußorgan 13 sowie ein Druckstück 14 umfaßt. Das Verschlußorgan 13 stützt sich dabei mit seiner einen ringförmigen Stirnfläche an einem ringförmigen Absatz 15 des zylindrischen Trägers 12 und mit seiner gegenüberliegenden ringförmigen Stirnfläche an einer entsprechenden Ringfläche 16 des Druckstückes 14 ab. Der Träger 12 und das Druckstück 14 sind relativ zueinander verschiebbar geführt, und zwar dadurch, daß ein die Ringfläche 16 aufweisender ringförmiger Ansatz 17 des Druckstückes 14 über die zylindrische Umfangsfläche 20 des Trägers 12 greift und zusätzlich ein zylindrischer Vorsprung 21 des Druckstückes 14 in eine entsprechende Ausnehmung 22 im Träger 12 eingreift.

Zum betriebsmäßigen Öffnen und Schließen der Verschluß- und Dichtungsvorrichtung 11 ist eine Hebelanordnung 25 vorgesehen. Diese weist zwei im wesentlichen gleiche zweiarmige abgewinkelte Hebel 26 auf, die jeweils einen längeren Hebelteil 27 und einen kürzeren Hebelteil 30 aufweisen. Die längeren Hebelteile 27 sind an ihren Enden durch einen Bedienungshandgriff 31 verbunden. Die kürzeren Hebelteile 30 sind jeweils von einem Lagerbolzen 32 durchsetzt und besitzen eine mit der Außenfläche 33 des Druckstückes 14 zusammenwirkende, mehrere Abschnitte aufweisende Arbeitsfläche 34. Der Lagerbolzen 32 ist in einem Endteil 35 eines bolzenförmigen Stützorgans 36 gehalten, das in dem Träger 12, beispielsweise durch Gewinde, verankert ist und durch die Öffnung 23 des Druckstückes 14 hindurchragt.

Wie die Figur 1 zeigt, ruht der kürzere Hebelteil 30 mit einem ersten ebenen Abschnitt 37 der Arbeitsfläche 34 auf dem Druckstück 14. In dieser Stellung ist das Verschlußorgan 13 unter axialen Druck gesetzt, derart daß eine dichte Anlage des Verschlußorgans 13 an der inneren Wandfläche 4 des Gehäuses 1 einerseits und an der Mantelfläche 20 des Trägers 12 gewährleistet ist. Soll die Verschluß- und Dichtungsvorrichtung 11 gelöst und entfernt werden, so wird die Hebelanordnung 25 in der Richtung eines in der Figur 1 eingetragenen Pfeiles 40 derart geschwenkt, daß zunächst ein abgerundeter Abschnitt 41 der Arbeitsfläche 34 und anschließend ein zweiter ebener Abschnitt 42 der Arbeitsfläche 34 wirksam wird, dessen Abstand von der Drehachse des Lagerbolzens 32 jedoch geringer ist als der erste ebene Abschnitt der Arbeitsfläche 34. Hierdurch wird das Verschlußorgan 13 von dem axialen Druck entlastet und die Haftung an den Wandungen des Gehäuses und des Trägers 12 wird aufgehoben. Die aus dem Träger 12, dem Druckstück 14 und der Hebelanordnung 25 bestehende Verschluß-und Dichtungsvorrichtung 11 läßt sich nun aus der Öffnung 3 des Gehäuses 1 herausziehen. Zugleich werden hiermit die Kontaktfedern 7 entfernt, die an Fortsätzen 43 des Trägers 12 befestigt sind. Anschließend läßt sich daher auch die HH-Sicherung 2 aus dem Gehäuse 1 entfernen deren Kopfteil 44 in einer zentrischen Vertiefung 45 des Trägers 12 aufgenommen ist.

## Patentansprüche

1. Gehäuse zur Aufnahme eines Hochspannungs-Bauteiles mit einer Verschluß- und Dichtungsvorrichtung, die ein axial komprimierbares und an konzentrische Wandflächen anlegbares gummielastisches Verschlußorgan aufweist, **dadurch gekennzeichnet**, daß das gummielastische Verschlußorgan (13) am Umfang eines in eine Öffnung (3) des Gehäuses (1) einführbaren zylindrischen Trägers (12) angeordnet ist und in axialer Richtung einerseits an einem ringförmigen Absatz (15) des Trägers (12) und andererseits an einem relativ zu dem Träger (12) axial verschiebbar angeordneten Druckstück (14) abgestützt ist.

2. Gehäuse nach Anspuch 1, **dadurch gekennzeichnet**, daß eine betriebsmäßig bedienbare Hebelanordnung (25) zur Verschiebung des Druckstückes (14) relativ zu dem Träger (12) vorgesehen ist.

3. Gehäuse nach Anspruch 2, **dadurch gekennzeichnet**, daß das Druckstück (14) mit einer Durchtrittsöffnung (23) für ein in dem Träger (12) verankertes Stützorgan (36) versehen ist und daß an dem über das Druckstück (14) überstehenden Endteil (35) des Stützorgans (36) ein zweiarmiger Hebel (26) mit einer dem Druckstück (14) zugewandten Arbeitsfläche (34) schwenkbar gelagert ist.

4. Gehäuse nach Anspruch 3, **dadurch gekennzeichnet**, daß zwei aus Stützorganen (36) und Hebeln (26) bestehende Hebelanordnungen (25) vorgesehen und die dem Druckstück (14) abgewandten Enden der Hebel (26) durch einen Bedienungshandgriff (31) verbunden sind.

5. Gehäuse nach einem der vorangehenden Ansprüche, **dadurch gekennzeichnet**, daß das Gehäuse (1) zur Aufnahme einer HH-Sicherung (2) rohr- oder zylinderförmig ausgebildet und nahe seinem durch die Verschluß- und Dichtungsvorrichtung (11) zu verschließenden Ende mit einem zu erdenden Flansch (5) versehen ist.

6. Gehäuse nach Anspruch 5, **dadurch gekennzeichnet**, daß der Träger (12) des Verschlußorgans (13) an seinem der HH-Sicherung (2) zugewandten Ende mit Haltearmen (43) für Kontaktfedern (7) sowie mit einer zentrischen Vertiefung (45) zur Aufnahme eines kontaktseitigen Kopfteiles (44) der HH-Sicherung (2) versehen ist.

## Claims

1. A casing for receiving a high-voltage component with a closing and sealing device, which comprises an axially compressible rubber-elastic closing member which can be fitted against concentric wall surfaces, characterised in that the rubber-elastic closing member (13) is arranged on the circumference of a cylindrical support (12), which can be introduced into an opening (3) in the casing (1), and the closing member (13) is supported in the axial direction at one end against an annular shoulder (15) of the support (12) and at the other end against a pressure element (14) arranged so as to be axially displaceable relative to the support (12).

2. A casing according to claim 1, characterised in that a lever arrangement (25), which can be actuated as a function of operation, is provided for displacing the pressure element (14) relative to the support (12).

3. A casing according to claim 2, characterised in that the pressure element (14) is provided with a through aperture (23) for a support member (36) anchored in the support (12), and a two-arm lever (26) with an operating surface (34) facing the pressure element (14) is pivotally mounted on the end section (35) of the support member (36) projecting beyond the pressure element (14).

4. A casing according to claim 3, characterised in that two lever arrangements (25) comprising support members (36) and levers (26) are provided and the ends of the levers (26) remote from the pressure element (14) are connected by an operating handle (31).

5. A casing according to one of the preceding claims, characterised in that the casing (1) is tubular or cylindrical in shape in order to receive a high-voltage fuse (2) and is provided in the vicinity of its end which is to be sealed by the closing and sealing device (11) with a flange (5) which is to be earthed.

6. A casing according to claim 5, characterised in that the support (12) of the closing member (13) is provided at its end facing the high-voltage fuse (2) with securing arms (43) for contact springs (7) and with a central recess (45) for receiving a contact-side head section (44) of the high-voltage fuse (2).

## Revendications

1. Boîtier destiné à loger un composant à haute tension et comportant un dispositif de fermeture et d'étanchéité, qui possède un organe de fermeture présentant l'élasticité du caoutchouc et qui peut être comprimé axialement et peut être appliqué contre des surfaces concentriques de paroi, caractérisé par le fait que l'organe de fermeture (13), qui possède l'élasticité du caoutchouc, est disposé sur le pourtour d'un support cylindrique (12) pouvant être introduit dans une ouverture (30) du boîtier (1) et prend appui, dans la direction axiale, d'une part, sur un épaulement annulaire (15) du support (12) et, d'autre part, sur un élément de pression (14) disposé de manière à être déplaçable axialement par rapport au support (12).

2. Boîtier selon la revendication 1, caractérisé en ce qu'il est prévu un dispositif à levier (25), qui peut être commandé en fonctionnement et sert à déplacer l'élément de pression (14) par rapport au support (12).

3. Boîtier selon la revendication 2, caractérisé en ce que l'élément de pression (14) est pourvu d'une ouverture de passage (23) pour un organe de support (36) ancré dans le support (12), et qu'un levier à deux bras (26) comportant une surface de travail (34) tournée vers l'élément de pression (14) est monté pivotant sur la partie d'extrémité (35), qui fait saillie au-delà de l'élément de pression (14), de l'organe de support (36).

4. Boîtier selon la revendication 3, caractérisé par le fait qu'il est prévu des dispositifs à leviers (25) constitués par des organes de support (36) et des leviers (26) et que les extrémités des leviers (26), qui sont situées à l'opposé de l'élément de pression (14), sont reliées par une poignée d'actionnement (31).

5. Boîtier selon l'une des revendications précédentes, caractérisé en ce que le boîtier (1) est réalisé avec une forme tubulaire ou cylindrique de manière à loger un fusible HH (2) et comporte, à proximité de son extrémité devant être fermée par le dispositif de fermeture et d'étanchéité (11), une bride (5) devant être raccordée à la terre.

6. Boîtier selon la revendication 5, caractérisé par le fait que le support (12) de l'organe de fermeture (13) comporte, au niveau de son extrémité tournée vers le fusible HH (2), des bras de retenue (43) pour des ressorts de contact (16) ainsi qu'un renfoncement centré (45) servant à loger une partie de tête (44), située du côté du contact, du fusible HH (2).
